# EUROPEAN PATENT APPLICATION

(11) **EP 3 151 367 A1**
(43) Date of publication of application: **05.04.2017**
(21) Application number: 16185831.1
(22) Date of filing: 26.08.2016
(51) Int. Cl.: H02J 7/00, H02J 3/32

(54) **BATTERY BACKUP CAPACITY METHOD AND SYSTEM**

(30) Priority: 26.08.2015 US 201514836340
(71) Applicant: The AES Corporation, Arlington, Virginia 22203 (US)
(72) Inventor: SHELTON, John C., Arlington, VA Virginia 22203 (US); PERUSE, Brian, Arlington, VA Virginia 22203 (US); GALURA, Brett, Arlington, VA Virginia 22203 (US); JEFFERSON, Isaiah, Arlington, VA Virginia 22203 (US); JACOBSON JR., Wells Case, Arlington, VA Virginia 22203 (US); GEINZER, Jay, Arlington, VA Virginia 22203 (US)
(74) Representative: Awapatent AB

(57) **Abstract**

Approaches for providing backup energy services for a power grid are disclosed. In embodiments, methods and systems for obtaining a first group of reserve backup energy batteries of a first type, which have a different cost structure than a second group of main batteries of a second type. The first group of reserve batteries are combined with the second group of main batteries of the second type to increase a total amount of available energy that is stored and converting DC power from the first group of batteries and the second group of batteries to AC power to be used for power distribution to the grid.

## Description

### FIELD OF THE INVENTION

The present disclosure is directed to methods and systems for providing backup energy services for a power grid and, more particularly, backup energy services for a hybrid electric generating power plant that uses batteries in an energy storage system or a standalone energy storage system for additional storage capability.

### BACKGROUND OF THE INVENTION

Typically, a utility obtains electric power from one or more primary power generation sources, such as gas-fired, coal-fired, nuclear and/or hydroelectric power plants, for delivery to customers via a distribution grid. The power supplied by these sources and the demand placed on them can vary moment-to-moment. Generally, the sources can be regulated to meet the demands of customers while at the same time conforming to the standards for such power, such as nominal voltage and frequency levels.

To supplement the power supplied by these primary power generation sources, it is becoming more common to connect a backup energy storage system for providing backup power, such as industrial grade batteries. Among other advantages, a backup energy storage system can augment power supplied by a primary power generation source during periods of peak load or high demand, disruptions such as interuptions of power from primary power generation sources or constraints on transmission during normal operations, a power generator going offline, or to augment intermittent or variable power sources.

For example, the electrical grid often experiences high demand during the summer months. In addition, periods of peak load can also occur at different times during the day.

Such periods of high demand may exceed the capability of a utility's primary power generation source to respond. In addition, there is often an economic impact when responding to such increases in demand by increasing the power generation rate of a primary generation source, especially when such an increase in power demand is only of relatively short duration. Further, if other measures are not taken, the primary power generation source might need to have excess capacity to meet peak demand, with the excess capacity sitting idle and unused for all but the peak demand.

A known solution exists for responding to energy demand fluctuations by supplementing the power generated from a primary generation source with energy stored in an energy storage system, such as a backup battery storage system. The energy storage system can continuously balance load and generation. Energy storage systems are regulated to conform to a set of standards, which define the amount of backup energy capacity that must be available at any given instance. Such regulating standards can be defined by statute, regulatory commissions, contract provisions, factor of safety specifications, and/or internal operating procedures.

A situation often exists in an energy storage system where the regulating standards require an available energy capacity that exceeds the highest or typical demand placed on the backup energy storage system. For example, regulations may require a backup battery system to provide six hours of sustained use at a defined rate of draw for addressing periods of high energy demand.

However, the real-world peak demand on an electric utility provider may never exceed the need to provide more than four hours' worth of backup energy capacity. In this situation, a proportion of the battery system's resources are wasted in providing two hours' worth of available backup energy capacity, which will possibly never be used. This capacity is referred to herein as reserve backup energy capacity. Backup battery storage systems often comprise expensive industrial grade, rechargeable cell batteries (known in the industry as "secondary batteries") of uniform or similar types, specifically designed for backup energy services. See U.S. Patent Application No. 14/721,522, entitled "Modular Energy Storage Method and System," herein incorporated by reference.

In such a situation, backup energy storage systems do not implement the most efficient utilization of resources. Therefore, a problem exists when expensive backup energy storage system resources are wasted by providing available backup capacity that is required by regulating standards, but is not usually necessary to satisfy real-word demand placed on the power grid. Accordingly, it is desired to have a potentially more cost effective, less wasteful, and/or efficient method and system for distributing and managing the resources of a backup energy storage system, in manner that complies with both regulating standards and real-world demand.

### BRIEF SUMMARY

The present disclosure is directed to methods and systems for efficiently managing a utility's resources and providing available energy capacity in a backup energy storage system, such as the reserve backup energy storage system.

One exemplary method includes obtaining batteries as reserve backup energy batteries that have a different cost structure (e.g., purchase price, maintenance costs, storage costs, etc.) than industrial-grade batteries that are commonly used in energy storage systems, such as a plurality of non-rechargeable batteries (also known as "primary batteries") or batteries that can be refurbished at a level of effort and/or expense greater than that for rechargeable batteries (i.e. secondary batteries). The reserve power can also be provided by other types of batteries than non-rechargeable batteries. Reserve backup energy batteries can include consumer-grade batteries used in toys and the like, or relatively inexpensive non-rechargeable industrial batteries. The reserve backup energy batteries are connected to a plurality of industrial-grade, rechargeable batteries (i.e., secondary cell batteries) either in series or in parallel, or both, to meet the desired available voltage and amperage levels for a power plant battery backup. Alternatively, the method can include obtaining batteries that have a cost structure that differs in that it is more expensive than the commonly used industrial-grade batteries, but provides other desirable properties, such as the long shelf-life associated with metal-air batteries. The method further comprises connecting the obtained reserve backup energy batteries to an inverter such that DC power from the backup energy batteries (i.e., non-rechargeable batteries and perhaps a plurality of other industrial grade batteries) is converted to AC power to be used for power distribution.

Another exemplary method includes obtaining a plurality of non-rechargeable batteries, such as consumer-grade batteries or metal-air batteries, as reserve backup energy batteries. The method further comprises connecting the plurality of non-rechargeable batteries to a plurality of other, main backup energy batteries, either in series or parallel, or both, to meet the desired available voltage and amperage levels for, e.g., a hybrid power plant battery backup, as well as other applications. The method includes determining a required amount of available backup energy storage capacity for a power plant, determining a first amount of main backup energy storage capacity to be fulfilled by the plurality of rechargeable batteries (e.g., industrial batteries), and determining a second amount of reserve backup energy storage capacity to be fulfilled by the plurality of non-rechargeable batteries or other cell batteries whose cost structure is favorable to one-time or rare use over a period of time compared to the rechargeable batteries used in the main backup energy storage, wherein the second amount is determined such that when added to the capacity of the industrial-grade batteries the total amount of available energy capacity is equal to the required amount of available backup energy storage capacity. DC power is converted from the plurality of reserve backup energy batteries and the main backup energy batteries to AC power to be used for power distribution. The DC power can provided by the different types of batteries together in combination or separately, for example in a sequential manner or separately switched.

For example, the amount of reserve battery backup energy and the type of the non-rechargeable batteries is determined in order to fulfill a difference between a required energy storage capacity and the lesser estimated main energy storage capacity needed to satisfy real-world demand. The energy storage capacity difference is fulfilled by the non-rechargeable batteries in an economical and efficient manner, thus providing a technical solution to the technical problem of complying with regulations that address a hypothetical but unlikely or infrequent worst-case power demand scenario, while avoiding wasting valuable resources in the form of rechargeable batteries or industrial-grade batteries.

An exemplary system can include an inverter that is configured to convert DC power from the plurality of main backup energy batteries and the plurality of reserve backup energy batteries to AC power to be used for power distribution.

These and other features and advantages of particular embodiments of the backup capacity method and system will now be described by way of exemplary embodiments to which they are not limited.

### BRIEF DESCRIPTION OF THE DRAWING/FIGURES

Exemplary embodiments are best understood from the following detailed description when read in conjunction with the accompanying drawings. It is emphasized that, according to common practice, the various features of the drawings are not to scale. On the contrary, the dimensions of the various features may be arbitrarily expanded or reduced for clarity. Included in the drawings are the following figures:
FIG. 1 is a schematic diagram illustrating an exemplary utility comprising a power plant and a backup energy storage system connected in combination or separately to an electric grid.
FIG. 2 is a schematic diagram illustrating an exemplary utility comprising a power plant having a primary power generation source and a backup energy storage system connected to an electric grid including reserve backup energy batteries.
FIG. 3 is a flow chart illustrating a battery storage method of one exemplary embodiment.
FIG. 4 is a flow chart illustrating a battery storage method of another exemplary embodiment.
FIG. 5 is a graph showing energy demand and available energy storage requirements.
FIG. 6 is a bar graph showing the energy capacities provided by a first group of batteries, a second group of batteries and a total combined available energy capacity of the first and second groups.
FIG. 7 is a schematic diagram illustrating an exemplary node-based system for providing backup energy storage.
FIG. 8 is a schematic diagram illustrating an exemplary utility comprising a power plant and a backup energy storage system connected to an electric grid including reserve backup batteries for charging a principal battery storage system and providing power to the grid.

### DETAILED DESCRIPTION

This description provides exemplary embodiments only, and is not intended to limit the scope, applicability or configuration of the battery backup capacity methods and systems. Rather, the ensuing description of the embodiments will provide those skilled in the art with an enabling description for implementing various embodiments of the battery backup capacity methods and systems. Various changes may be made in the function and arrangement of elements without departing from the spirit and scope of the system and method as set forth in the appended claims. Thus, various embodiments may omit, substitute, or add various procedures or components as appropriate. For instance, it should be appreciated that in alternative embodiments, the methods may be performed in an order different than that described, and that various steps may be added, omitted or combined. Also, features described with respect to certain embodiments may be combined in various other embodiments. Different aspects and elements of the embodiments may be combined in a similar manner.

Reserve backup energy batteries include one or more of non-rechargeable batteries, consumer-grade batteries that are discounted or non-discounted batteries, and metal-air batteries or nearly any other battery that has a better cost profile for one-time or rare use over a period of time compared to the rechargeable main backup energy batteries that are called upon at a more frequent and predictable interval. In fact, they can be rechargeable batteries being retired (e.g., near end of life) from serving as main backup energy batteries or excess inventory of rechargeable batteries effectively stored but connected to the grid and used as reserve backup batteries, until needed. Discounted consumer-grade batteries may be discounted due to one or more of the following factors: age, proximity to their respective expiration dates, cost, quality, and/or availability. Consumer-grade batteries, for example, C-sized consumer-grade batteries, are often obtained at the lowest cost and have a high availability. Consumer-grade batteries can include non-rechargeable batteries including but not limited to the following types, sizes and materials: 4.5-volt, D, C, AA, AAA, AAAA, A23, 9-volt, and automotive batteries, for example. They may be alkaline, lithium, lithium-ion, nickel, nickel-cadmium, zinc, and lead-acid batteries, etc. Consumer-grade batteries are generally designed for occasional use by typical consumers and made available for purchase at retail stores. The terminals are often commonly point-contact terminal configurations (e.g., designed for springloaded battery contacts) and designed to be placed into common consumer goods, such as toys, electronic devices, cars for starting a combustion engine, etc. In addition, non-rechargeable batteries include metal-air batteries including but not limited to the following types: Aluminum-air, Beryllium-air, Calcium-air, Iron-air, Lithium-air, Magnesium-air, Sodium-air, Titanium-air, Zinc-air. The metals used in metal-air batteries can be in the form of different alloys. The alloys can vary depending on desired battery characteristics (e.g. anode oxidation rates, longevity, etc.). Metal-air batteries provide many advantages such as high energy storage, lightweight, low operating pressure, long shelf life, and low environmental impact. Typically, metal-air batteries are not electrically rechargeable, but can be mechanically recharged through replacement of the metal anode.

In contrast, rechargeable batteries include industrial-grade batteries that are designed to be significantly more durable, often have terminals and forms suitable for a specific application and are generally available through industrial sales companies, rather than retail stores, at this time. They are commonly used in industrial applications, uninterruptable power supplies (UPS), battery packs for electric car drive systems, rechargeable consumer electronics and power tools, etc.

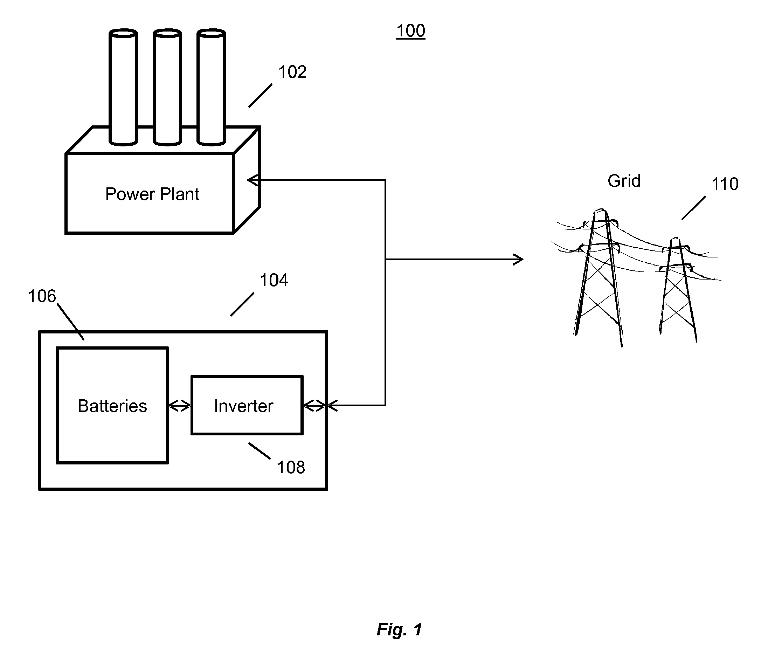

Figure 1 illustrates an electric utility 100 including a primary power generation source 102 and a backup energy storage system 104 providing electricity to an electric power grid 110. The primary power generation source 102 can include one or more of gas-fired, coal-fired, nuclear and/or hydroelectric power plants as examples for electric power delivery to customers via a distribution grid. The primary power generation source 102 can alternatively or additionally include renewable energy sources such as wind, solar, tidal, biomass, biofuels, geothermal and/or thermoelectric power plants, for example.

The power supplied by a utility's primary power generation sources and the demand placed on them can vary moment-to-moment, or over longer cycles. For example, electric utilities often experience periods of high energy demand from the electric grid during certain months of the year and times of the day. Momentary demands can be caused by a large consumer (e.g., industrial plant or operation) going online. Air-conditioning units run more often during the hot summer months, further increasing the power demand placed on the electric grid. Also, electrical appliances and air-conditioners are utilized more often during certain times of the day, such as during typical working hours or mid-afternoon when the outside temperature is the hottest. The level of demand is usually predictable but power plants, often by regulation, have to be able to handle unexpected or unusual demand.

Increases in power demand from the grid 110 is fulfilled by increasing the output from the primary power generation source 102. The primary power generation source 102 can increase the total level of output power and the rate at which the output power is increased, in order to closely follow and meet current power demand from the electric grid 110. However, increasing the level of output power and/or the rate at which the output power level increases by the primary power generation source 102 can increase operation costs due to consumption of resources, including increased fuel consumption, wear and tear placed on the systems, required maintenance, required man power, etc.

Increases in power demand from the electric grid 110 can cause peak load to occur, also referred to as peak demand. In the event that an electric utility cannot respond fast enough to such periods of peak demand, failures can occur to the utility, the grid, and entities serviced by the electrical grid. Such failures can be catastrophic and result in brownouts or blackouts.

At least a portion of power supply or demand increases can be handled by a backup energy storage system 104. The backup energy storage system 104 includes batteries 106 and an inverter 108. Inverter 108 changes direct current (DC) to alternating current (AC) for supplying power to the electric grid 110. Inverter 108 can be bi-directional for managing decreases in load or increases in generation from the primary power source. The power provided by the batteries 106 can augment the power provided by the primary power generation source 102 for supplying a combined power output to the electric grid 110. The backup energy storage system 106 can include rechargeable and/or non-rechargeable batteries including but not limited to the following: alkaline, lithium, lithium-ion, nickel, nickel-cadmium, zinc, and lead-acid batteries.

Power supplied by the backup energy storage system 104 can be combined with the power supplied by the primary power generation source 102, in order to more efficiently meet and follow the power demands placed on the electric grid 110. Alternatively, the power supplied by the backup energy storage system 104 can be connected to the grid separate from the primary power generation source 102.

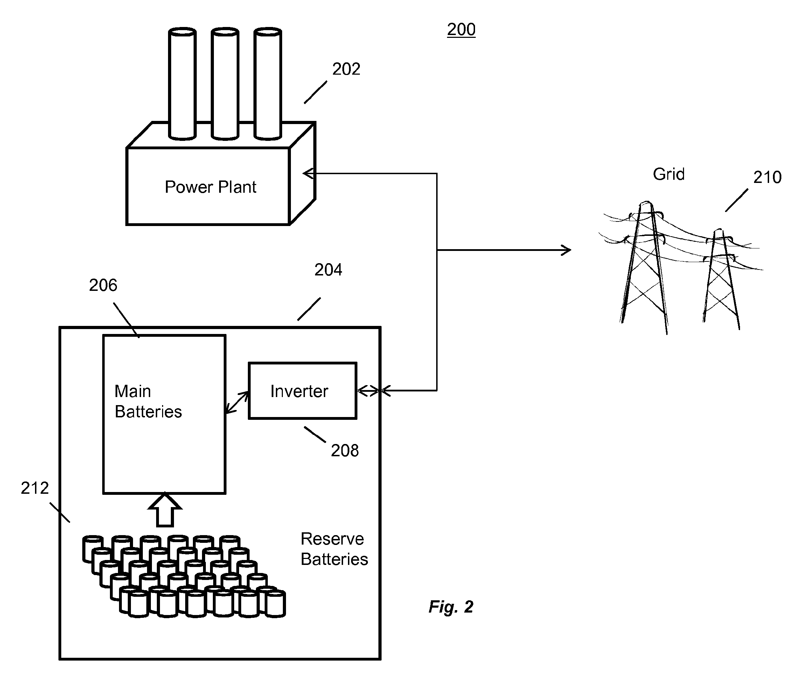

As an exemplary embodiment, Figure 2 illustrates an electric utility 200 including a backup energy storage system 204 including an inverter 208 and main backup energy batteries 206, which can include rechargeable batteries (e.g. industrial-grade batteries). The main backup energy batteries 206 are connected to a group of reserve backup energy batteries 212, where at least a portion of the backup energy capacity is provided by the reserve backup energy batteries 212. The reserve backup energy batteries can include non-rechargeable batteries (e.g. consumer-grade batteries, or metal-air batteries). Alternatively, the reserve backup energy batteries 212 can include rechargeable batteries of a different cost structure than the main backup energy batteries 206. Power output from a primary power generation source 202 is combined with power output from backup energy storage system 204 to provide electricity to electric grid 210.

The type, size and amount of batteries in the backup energy storage system are determined, obtained, organized and controlled in an optimized manner. For example, a first group of main backup energy batteries (e.g. rechargeable, industrial-grade batteries) is combined with a second group of reserve backup energy batteries (e.g., consumer-grade batteries or metal-air batteries) and respective roles are determined and assigned to each group, such that each group fulfills different energy storage capacity requirements (e.g., main backup and reserve backup). The first group of main backup energy batteries can be connected to the second group of reserve backup energy batteries, or the different groups of batteries can be connected separately to the grid through common inverters, separate inverters or other intermediate devices.

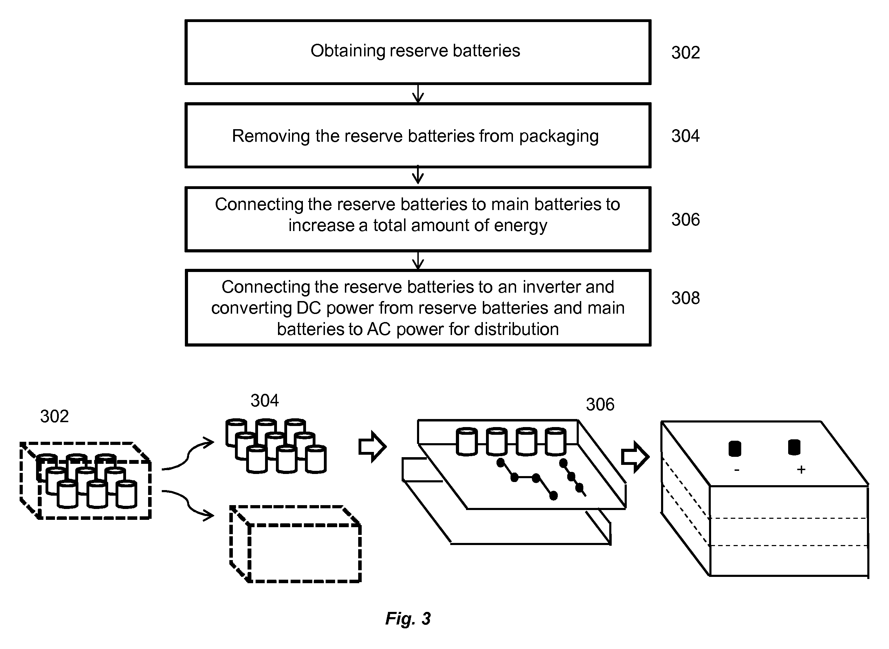

Figure 3 illustrates a method including obtaining a plurality of batteries which differ in cost structure, for example consumer-grade batteries (step 302). Consumer-grade batteries can be obtained in large quantities. For example, hundreds of thousands or even millions of consumer-grade batteries can be obtained. The obtaining step can include obtaining a plurality of industrial-grade or rechargeable batteries that have a different cost structure, such as being subject to a limited use contract or lease, or return policy. The obtaining step may include shipping batteries by the truck load. The consumer-grade batteries may be obtained through a resupply contract. The resupply contract may involve ejecting old consumer-grade batteries from the backup energy storage system, recycling the old consumer-grade batteries, and repopulating the old consumer-grade batteries with replacement consumer-grade batteries. The consumer-grade batteries can be ejected, recycled, and replaced on a continuing basis.

The plurality of reserve backup energy batteries (e.g., consumer-grade batteries) are removed from any existing packaging (step 304). The existing packaging might be the packaging encountered by a typical consumer, e.g., rigid, sealed plastic holding a relatively small number of batteries. Alternatively, batteries in storage containers awaiting consumer-grade packaging and diverted therefrom can be used. Removal of the batteries from the packaging can be automated, wherein the packages are opened, the contents removed and conveyed to another location for repackaging in battery packs that includes terminals that are interconnected to place the batteries in series, parallel or combinations thereof to achieve a desired voltage and amperage for that pack. Alternatively, step 304 can be skipped and the batteries can be used while remaining in the packaging by making an electrical connection through the packaging (e.g., piercing the packaging by inserting electrodes), or by use of specifically made packaging that allows the batteries to be commercially used while in the packaging. For example, consumer-grade batteries may be temporarily warehoused while connected to the backup energy storage system before final delivery to typical consumers, as new or slightly degraded batteries.

After the reserve backup energy batteries are removed from any existing packing, the batteries are connected to a plurality of main backup energy batteries (e.g., rechargeable or industrial-grade batteries) to increase a total amount of available energy that is stored (step 306). For example, the individual consumer-grade batteries can be placed in trays that have terminals placed to make contact with the positive or negative terminals of the individual batteries and interconnected by conductors embedded or connected to the trays to achieve the desired amperage and voltage. One or more trays can then be placed and interconnected to each other in a larger package, and the larger package can have the form and terminal connections that mimic industrial-grade batteries or battery packs for easy integration with existing systems. Of course, this can be done manually.

The method further comprises converting DC power from the reserve backup energy batteries (e.g., discounted consumer-grade batteries) and the main backup energy batteries to AC power to be used for power distribution (step 308). In an alternative embodiment, non-rechargeable batteries other than consumer-grade batteries, such as metal-air batteries, can be combined with the plurality of other batteries and used for power distribution. The different types of batteries can be connected together in combination or separately, typically through intermediate housings, electrodes and circuitry, as will be apparent to one skilled in the art. For example, the different types of batteries can be individually switched, or otherwise controlled.

In one embodiment, an automated device or system is employed to automatically remove consumer-grade batteries from any existing packaging and perform alignment operations, in order to insert the consumer-grade batteries into a backup energy storage system. The automated device optionally incudes a conveyer belt for transporting and organizing the batteries within one or more groups, and a slicer or slicers for removing any packaging.

The automated device or system can perform one or more tests for each battery. For example, the batteries can be tested for internal or external damage. The automated device or system can employ one or more imaging or sensing systems. The imaging systems can include thermal, optical and/or x-ray imaging. Also, the automated device or system can employ voltage, current and temperature sensors. The batteries can be tested for voltage, current, temperature and storage capacity determinations. Batteries that are determined to be damaged or otherwise fail the testing process can be automatically identified and discarded or recycled. Alternatively, batteries that fail testing may be sorted into one or more groups for further processing.

The automated device includes one or more arranging devices for automatically orienting the batteries in the appropriate direction in preparation for connection. The automated device can orient and arrange the batteries with a sifting method. For example, a container portion with a series of holes can be employed, wherein each hole is only large enough to let a single battery pass through. The holes can be of varying sizes in order to process batteries of different types and sizes. The container portion can employ mechanical means to help pass batteries through the holes, such as shaking or pressure. Of course, this can be done manually.

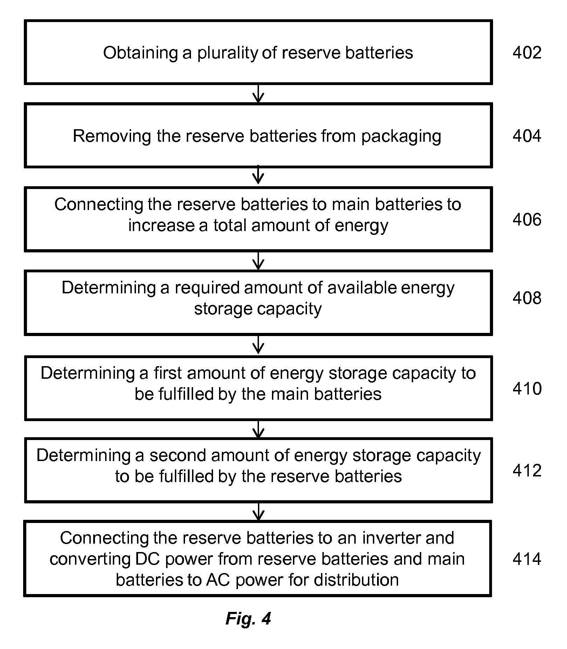

Figure 4 depicts a method obtaining a plurality of reserve (e.g., backup energy) batteries (e.g. consumer-grade batteries) (step 402) and removing the reserve batteries from any existing packaging (step 404). Several of the steps are common to the method of Figure 3. The method further comprises connecting the plurality of reserve batteries (e.g., discounted consumer-grade batteries) to a plurality of main backup energy batteries (e.g., industrial-grade batteries that can be used, for example, backup energy) to increase a total amount of available energy (step 406). The method includes determining a required amount of available energy storage capacity (e.g., backup storage capacity) (step 408), determining a first amount of storage capacity (e.g., backup storage capacity) to be fulfilled by the main batteries (e.g., industrial-grade, rechargeable) (step 410), and determining a second amount of reserve storage capacity (e.g., backup storage capacity) to be fulfilled by the reserve batteries (step 412), wherein the second amount is determined such that the total amount of available energy is at least equal to the required amount of available storage capacity (e.g., available backup storage capacity). DC power is converted from the plurality of reserve batteries and the plurality of main batteries to AC power to be used for power distribution (step 414). In an alternative embodiment, primary cell batteries other than consumer-grade batteries, such as metal-air batteries, can be used in place of the consumer-grade batteries.

In another embodiment, requirements for available backup energy storage capacity are determined and/or defined for a utility's backup energy storage system. A first backup energy storage capacity requirement for the backup energy storage system defines a total amount of available energy capacity. The first backup energy storage capacity requirement is determined based on statute, regulation, contract specifications, factor of safety specifications or internal procedures, warranties, and/or standard operating procedures. For example, a utility provider may be required to provide 10 Megawatt-hours (MWh) of available backup energy capacity, per Megawatt of output from a primary power generation source (e.g. a power plant), in order to successfully address periods of peak demand or peak load from the electric grid. In this example, the required 10 Megawatt-hours (MWh) of available backup energy capacity are provided by main backup energy batteries (e.g., rechargeable batteries), in order to allow the utility to deliver high quality of service and a fast load following response time. However, providing the required total reserve capacity of 10 Megawatt-hours (MWh) with high quality batteries is expensive. For example, 200,000 rechargeable batteries (e.g., industrial grade batteries) may be required to provide 1 Megawatt-hour (MWh). Industrial-grade, rechargeable batteries can cost 10 times more than consumer-grade or other non-rechargeable batteries per unit of energy storage. The cost difference between using industrial-grade batteries and consumer grade or other non-rechargeable batteries for a 100 Megawatt storage site is substantial. Similarily, industrial-grade, rechargeable cell batteries can cost much more than metal-air non-rechargeable batteries (e.g. Aluminum-air battery) per unit of energy storage and have a shorter self-life.

In another embodiment, expanding upon the previous example, a second backup energy storage capacity requirement is defined. The second backup energy storage capacity requirement is determined based on actual or probable real-word peak demand. For example, a utility provider may be required to provide 10 MWh per MW of available backup energy capacity. However, even in the worst case scenario, the backup battery storage system may never be tasked with having to provide more than 6 MWh of available energy to satisfy real-world peak load. Accordingly, batteries allocated to provide the reserve energy of the 4 MWh per MW difference between the required available energy capacity and the actual needed available energy capacity are under-utilized, thus creating a less than desirable distribution of battery resources. Effectively, a portion of the batteries may exist in a perpetual waiting state or standby mode, rarely or never used to service power demands from the electric grid.

In an exemplary embodiment, non-rechargeable batteries such as consumer-grade batteries or metal-air batteries are selected as reserve backup energy batteries to provide the 4 MWh per MW difference in energy capacity and higher quality batteries are selected to satisfy actual or probable real-word peak demand of 6 MWh of available energy capacity. In this way, the requirement of providing a total of 10 Megawatt-hours (MWh) per MW is satisfied while allowing for a more efficient distribution of resources. For example, consumer-grade batteries can fulfill the 4 MWh per MW difference in energy capacity at about 1/1^{th} the cost of using industrial-grade, rechargeable batteries. The replacement cost associated with replacing the consumer-grade batteries has a different cost structure than industrial-grade batteries, which is more beneficial, considering the 4 MWh per MW difference in energy capacity would likely not be needed, or if it were needed, it is highly likely that it would only be used in rare situations. In other words, under real-world conditions, the consumer-grade batteries would most likely not need to be frequently replaced. Similarly, other non-rechargeable batteries, such as metal-air batteries can be used as the reserve backup energy batteries to fulfill the 4 MWh per MW difference in capacity at a lower cost than using industrial-grade, rechargeable batteries, while also providing a longer shelf life, and the other benefits which can only be provided by metal-air batteries.

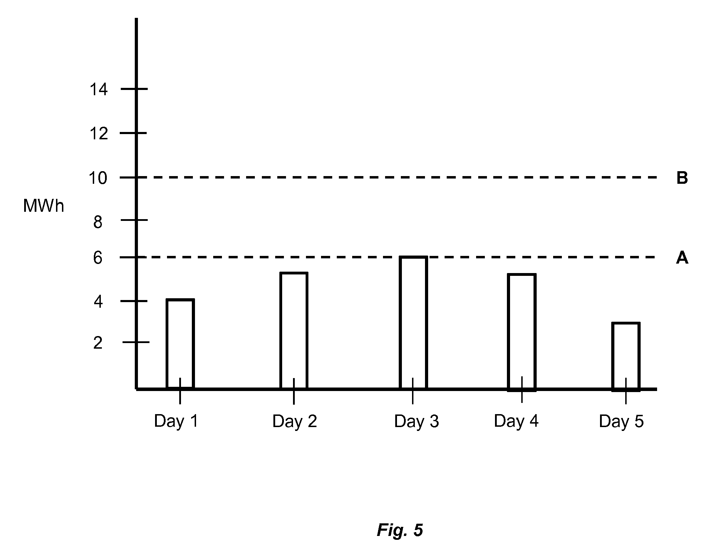

For example, Figure 5 shows a graph of energy demanded from the backup energy storage system during different days, according to load on the electric grid. Days are plotted along the x-axis of the graph. Required energy in MWh is plotted along the y-axis of the graph.

Line A represents the highest level of available energy required from the backup energy storage system based on real-world demand. However, this level can be defined according to other criteria, such as average demand, probable demand, historical or forecast demand, or a user defined level. This level can also be determined based on a cost-benefit analysis that examines factors such as service requirements, maintenance requirements and cost. Factors are assigned weights according to cost and/or importance. In an exemplary embodiment, high quality batteries are used to provide the energy capacity defined by the level shown at Line A.

Line B represents a total amount of available backup energy capacity required to be provided by the utility or other regulator, for example a capacity defined by statute or contract. The difference between line B and line A represents the portion of required available backup energy capacity that is underutilized or even unused, referred to hereinafter as standby capacity. Non-rechargeable batteries, such as consumer-grade batteries or metal-air batteries, are obtained for reserve backup energy batteries to satisfy the required standby capacity and are used with the other main backup energy batteries (e.g. industrial-grade batteries), in order to satisfy the total amount of available backup energy capacity requirement. In this way, the system could provide the full 10 MWh per MW of available energy in a rare case that such demand is required from the system.

According to another embodiment, the level of available energy capacity required to meet real-world demand, as shown by Line A, is determined by one or more of the following: heuristics, statistical analysis, historical statistics, usage profiles, forecast predications, contractual arrangements, probabilities, and statutory or other requirements. For example, a bidding algorithm is employed to assign costs to the different amounts of available capacity for addressing real-world demand.

In one embodiment, the level of standby capacity, as shown by Line B, is determined by one or more of the following: heuristics, statistical analysis, historical statistics, forecast predications, contractual arrangements, probabilities, and statutory or other requirements. For example, a bidding algorithm is employed to assign costs to different levels of available standby energy capacity.

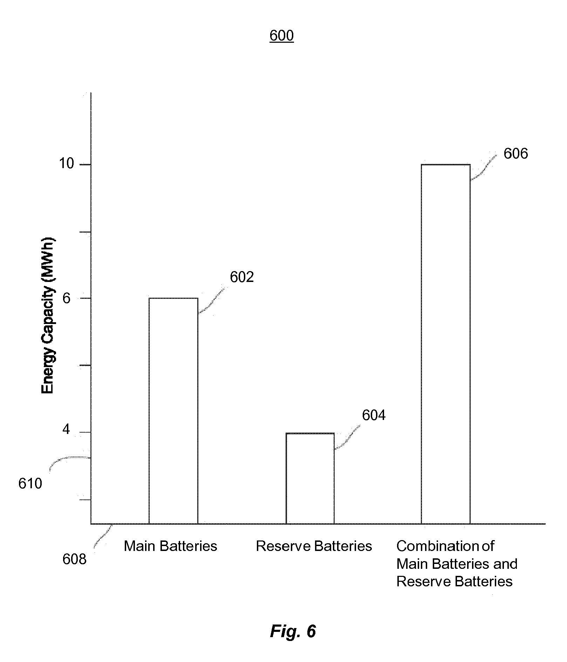

Figure 6 illustrates a bar graph 600 with energy capacity (MWh) plotted along the y-axis 610 and battery groups listed on the x-axis 608. As shown in Figure 6, available energy capacity of 6 MWh per MW is provided by a first group of main backup energy batteries 602 for addressing typical real-world peak demand on the electric grid. A second group of reserve backup energy batteries 604 provides 4 MWh per MW of standby available energy capacity. Bar 606 represents a combined available storage energy capacity of 10 MWh per MW provided by the first group of main backup energy batteries 602 and the second group of reserve backup energy batteries 604.

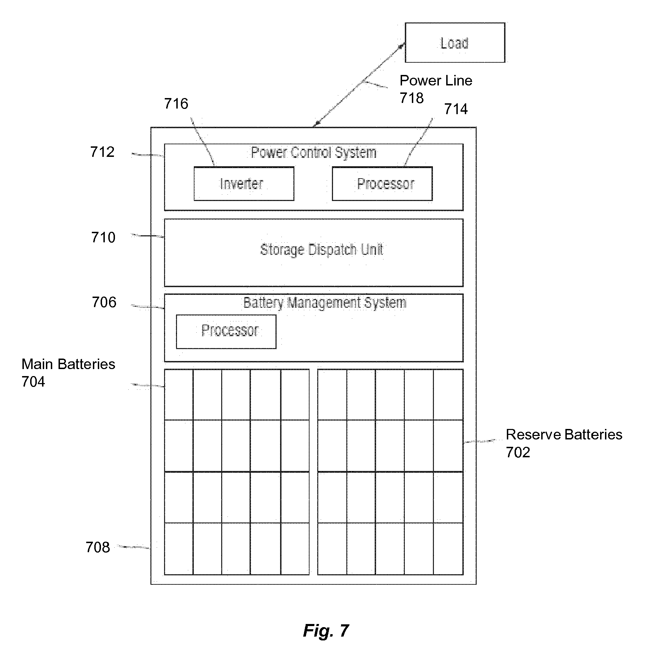

Figure 7 shows an exemplary embodiment that includes a utility 700 securing reserve backup energy batteries 702 in a battery storage module (e.g., rack) system 708 that holds the plurality of other main backup energy batteries 704, which can be used in a backup energy storage system. The battery storage module system 708 includes a battery management system 706 including a processor; a storage dispatch unit 710; and a power control system 712 including a processor 714 and a power converter 716, such as an inverter. The battery storage module system 708 is connected through a power line 718 to a load, such as an electric grid.

In one embodiment, the battery storage module system can provide multiple kilowatt-hours (kWh) with of energy capacity. The battery storage rack system can be connected to other battery storage rack systems in order to increase the total amount of available energy, in a scalable manner. For example, multiple battery storage rack systems can be connected in a scalable manner, in order to provide multiple Megawatt hours worth of stored energy capacity.

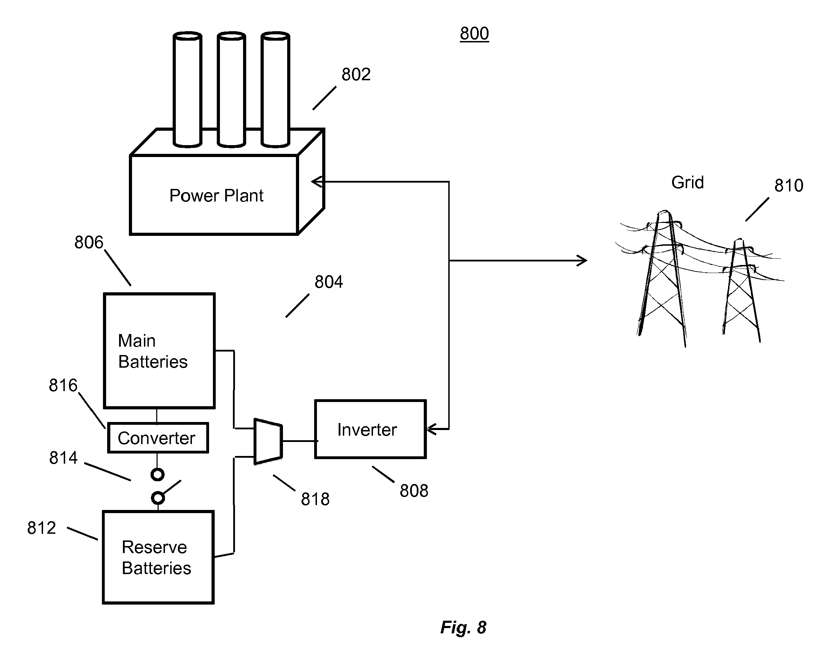

In an exemplary embodiment, Figure 8 illustrates an electric utility 800 including a backup energy storage system 804 including an inverter 808 and main backup energy batteries 806 including rechargeable batteries (e.g., industrial-grade batteries) similar to the embodiments of Figures 1 and 2, but with an additional ability to use the reserve backup energy batteries 812 to charge the main backup energy batteries 806 in appropriate circumstances. That is, as illustrated the main backup energy batteries 806 are connected to a group of reserve backup energy batteries 812. The reserve backup energy batteries 812 can include non-rechargeable batteries (e.g., consumer-grade batteries, metal-air batteries or other batteries of a different cost structure when compared to the industrial grade batteries). Power output from a primary power generation source 802 is combined with power output from backup energy storage system 804 to provide electricity to electric grid 810. The power output from backup energy storage system 804 can be varied, in order to respond to changing demands, by selectively switching between power provided from main backup energy batteries 806 and reserve backup energy batteries 812, as shown by switch 818. This includes selectively switching in some or all of the main backup energy batteries and some or all of the reserve backup energy batteries selectively to optimize their use while achieving the desired power output. Power provided by main backup energy batteries 806 can be variably combined with power provided by reserve backup energy batteries 812, or portions thereof. For example, switch 818 can select different portions of power to be provided from either or both of the main backup energy batteries 806 and reserve backup energy batteries 812 for a combined output power to inverter 808.

Also, power provided by reserve backup energy batteries 812 can be selectively switched between charging main backup energy batteries 806 through switch 814 and converter 816, and providing power to grid 810, via switch 818 and inverter 808. For example, reserve backup energy batteries 812 can be used to rapidly respond to periods of peak demand from the grid, and when the grid is no longer experiencing peak demand or power to the grid is no longer required from reserve backup energy batteries 812, power provided by reserve backup energy batteries 812 can be utilized to recharge main backup energy batteries 806.

While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the breadth or scope.

## Claims

1. A battery storage method, comprising:
obtaining a first group of reserve backup energy batteries of a first type;
connecting the first group of reserve energy batteries to a second group of main batteries of a second type to increase a total amount of available energy that is stored; and
connecting said first group of batteries and said second group of batteries to one or more inverters connected to a power grid such that DC power from the first group of batteries and the second group of batteries is available as converted AC power to the power grid.

2. The battery storage method of Claim 1, further comprising:
determining a required amount of available energy storage capacity,
determining a first amount of energy storage capacity to be fulfilled by the second group of batteries based on historical actual usage profiles, and
determining a second amount of energy storage capacity to be fulfilled by the first group of batteries, wherein the second amount is determined such that the total amount of available energy is equal to the required amount of available energy storage capacity that has historically not been actually needed or is unlikely to be needed.

3. The battery storage method of Claim 1 or 2, wherein the batteries of the first type are a plurality of consumer-grade batteries and/or metal-air batteries.

4. The battery storage method of Claim 3, wherein the plurality of consumer-grade batteries include one or more of the following: non-rechargeable batteries, alkaline batteries, nickel-cadmium batteries, and lithium-ion batteries.

5. The battery storage method of Claim 3 or 4, further comprising:
securing the plurality of consumer-grade batteries to a battery storage rack system that holds the second group of batteries.

6. The battery storage method of any one of the preceding claims, wherein the batteries of the second type are rechargeable batteries and/or industrial grade batteries.

7. The battery storage method of any one of the preceding claims, further comprising:
switching power provided by the first group of batteries between charging the second group of batteries and supplying power to the inverter of a power plant to provide power to the grid.

8. A battery storage system, comprising:
a first group of batteries of a first type;
a second group of batteries of a second type, wherein the first group of batteries are combined with the second group of batteries to increase a total amount of available energy that is stored; and
at least one inverter connected to a power grid that is configured to convert DC power from the first group of batteries and the second group of batteries to AC power and distribute the AC power to a power grid.

9. The battery storage system of Claim 8, wherein
a first amount of backup energy storage capacity to be fulfilled by the second group of batteries is determined based on historical actual usage profiles,
a second amount of backup energy storage capacity to be fulfilled by the first group of batteries is determined such that the total amount of available energy is equal to a required amount of energy storage capacity that has historically not been actually needed or is unlikely to be needed.

10. The battery storage system of Claim 8 or 9, wherein the batteries of the first type are a plurality of consumer-grade batteries.

11. The battery storage system of Claim 10, wherein the plurality of consumer-grade batteries include one or more of the following: alkaline batteries, nickel-cadmium batteries, and lithium-ion batteries.

12. The battery storage system of Claim 10 or 11, wherein the plurality of consumer-grade batteries are secured to a battery storage rack system that holds the second group of batteries.

13. The battery storage system of Claim 8 or 9, wherein the batteries of the first type are metal-air batteries.

14. The battery storage system of any one of Claims 8-13, wherein the batteries of the second type are rechargeable batteries and/or industrial grade batteries.

15. The battery storage system of any one of Claims 8-14, wherein the system is configured to:
switch power provided by the first group of batteries between charging the second group of batteries and supplying power to the inverter of the power plant to provide power to the grid.
